# EUROPÄISCHE PATENTANMELDUNG

(11) **EP 2 669 971 A1**
(43) Veröffentlichungstag der Anmeldung: **04.12.2013**
(21) Anmeldenummer: 12169992.0
(22) Anmeldetag: 30.05.2012
(51) Int. Cl.: H01M 2/26, H01M 2/28, H01M 10/12

(54) **Verbindungselement für eine Batterie, Batterie und Verfahren zur Herstellung einer Batterie**

(71) Anmelder: MTH Metall-Technik Halsbrücke GmbH & Co KG, 09633 Halsbrücke (DE)
(72) Erfinder: Ernst, Johannes, 09633 Halsbrücke (DE)
(74) Vertreter: Carlsohn, Alexander

(57) **Zusammenfassung**

Die Erfindung betrifft ein Verbindungselement (1) zum elektrischen Verbinden von Anschlussfahnen (24) gleichpoliger Platten (23) von Batterien (21). Erfindungsgemäß ist vorgesehen, dass das Verbindungselement (1) einen an seiner Oberseite offenen Grundkörper (2) mit einem Boden (3) und Seitenwänden (4) umfasst, die einen Innenraum (5) umschließen, wobei in dem Boden (3) des Grundkörpers (2) Schlitze (6) zur Hindurchführung der Anschlussfahnen (24) in den Innenraum (5) ausgebildet sind und wobei an einer Flächenseite des Bodens (3) eine Barriereschicht (7, 17) aufgebracht ist, die die Schlitze (6) vor Einführung der Anschlussfahnen (24) in den Innenraum (5) des Grundkörpers (2) verschließt.

## Beschreibung

Die Erfindung betrifft ein Verbindungselement für eine Batterie, eine Batterie, insbesondere eine Blei-Säure-Batterie, mit einem solchen Verbindungselement und ein Verfahren zur Herstellung einer Batterie.

Als Starterbatterien für Kraftfahrzeuge werden typischerweise Blei-Säure-Batterien, die auch als Bleiakkumulatoren bezeichnet werden, eingesetzt. Eine solche Batterie umfasst eine oder mehrere elektrochemische Zellen, die in ein mit einem Deckel verschlossenes Gehäuse eingesetzt sind. Jede Zelle weist einen Plattenblock aus ineinandergreifenden positiven und negativen Platten auf, die durch Separatoren voneinander getrennt sind. Jede Platte weist an ihrem oberen Rand eine Anschlussfahne auf, wobei jeweils die Anschlussfahnen der positiven Platten über ein positives Verbindungselement und die Anschlussfahnen der negativen Platten über ein negatives Verbindungselement elektrisch verbunden sind. Dabei befinden sich die Anschlussfahnen der positiven Platten fluchtend zueinander auf dem oberen Rand des Plattenblockes in einem ersten Bereich, der an eine Seitenkante des Plattenblockes angrenzt, während sich die Anschlussfahnen der negativen Platten fluchtend zueinander auf dem oberen Rand des Plattenblockes in einem zweiten Bereich befinden, der an die gegenüberliegende Seitenkante des Plattenblockes angrenzt und von dem ersten Bereich beabstandet ist. Von den Verbindungselementen erstrecken sich wiederum Pole aus dem Gehäuse heraus. An diese Pole können dann mittels Klemmen oder Steckern Leitungen angeschlossen werden.

Die Verbindungselemente zum elektrischen Verbinden der positiven oder der negativen Anschlussfahnen einer Zelle werden im Stand der Technik auch als Brücken oder Polbrücken, im Falle eines Bleiakkumulators auch Bleibrücken bezeichnet. Die Verbindung zwischen den Anschlussfahnen der gleichpoligen Platten einer Zelle mittels der Verbindungselemente wird üblicherweise unter Anwendung eines Verfahrens hergestellt, das als Brückenanguss- oder Cast-on-strap-Verfahren bezeichnet wird. Bei diesem Verfahren wird der Plattenblock über Kopf gelagert, so dass die Anschlussfahnen nach unten hängen. Die Anschlussfahnen werden dann in eine Gießform eingetaucht, die mit schmelzflüssigem Blei gefüllt ist. Bei Kontakt der Anschlussfahnen mit dem schmelzflüssigen Blei werden Anschlussfahnen angeschmolzen. Bei Abkühlung der Gießform erstarrt das schmelzflüssige Blei unter Ausbildung der Verbindungselemente, die fest mit den Anschlussfahnen verbunden sind. Einzelheiten hierzu können beispielsweise DE 197 39 277 A1 entnommen werden.

Es hat sich als zweckmäßig erwiesen, vorgefertigte Verbindungselemente einzusetzen. Ein solches Verbindungselement wird beispielsweise in US 5 227 266 beschrieben. Das Verbindungselement weist einen Grundkörper mit einer Unterseite und einer Oberseite auf, an der der Pol ausgebildet ist. In dem Grundkörper sind Schlitze ausgebildet, durch die die Anschlussfahnen gleichpoliger Platten geführt werden. Die Schlitze verengen sich von der Unterseite zur Oberseite, um das Einführen der Anschlussfahnen zu vereinfachen. An der Oberseite des Grundkörpers sollen die Schlitze möglichst dicht an die Anschlussfahnen angrenzen, um zu verhindern, dass Blei an den Anschlussfahnen zu den Platten herunterläuft, wenn die durch die Schlitze geführten Anschlussfahnen elektrisch miteinander verbunden werden. Die Schmalseiten des Grundkörpers weisen eine Riffelung auf.

US 5 227 266 sieht zur elektrischen Verbindung der Anschlussfahnen mit dem Verbindungselement Wolfram-Inertgas-Schweißen, induktive Erwärmung, autogenes Schweißen und ähnliche Verfahren vor. Bei diesen Verfahren ist die Menge des sich verflüssigenden Bleis der Anschlussfahnen klein, so dass die Gefahr des Eindringens schmelzflüssigen Bleis in die Platten gering, aber auch nicht ausgeschlossen ist.

Die Qualität der elektrischen Verbindung zwischen den Anschlussfahnen gleichpoliger Platten, wie sie bei Brückenangussverfahren erreicht wird, kann mit den Schweißverfahren jedoch nicht erhalten werden. Es sind daher Brückenangussverfahren bekannt, bei denen vorgefertigte Verbindungselemente eingesetzt werden, die einen wannenförmigen Grundkörper aufweisen, in denen Schlitze zum Einführen der Anschlussfahnen gleichpoliger Platten ausgebildet sind. Der Grundkörper weist an der Seite, die den Platten abgewandt ist, zweckmäßigerweise einen rohrförmigen Überstand auf, in dem der aus dem Gehäuse führende Pol befestigt werden kann.

Sollen nun mittels eines vorgefertigten Verbindungselementes unter Anwendung des Brückenangussverfahrens die Anschlussfahnen gleichpoliger Platten elektrisch leitend miteinander verbunden werden, so wird der Plattenblock, wie oben beschrieben, über Kopf gelagert, so dass die Anschlussfahnen nach unten hängen. Die Anschlussfahnen, die in die Schlitze des vorgefertigten Verbindungselementes eingeführt sind, gelangen nun in Kontakt mit schmelzflüssigem Blei, das sich in der Wanne des Grundkörpers befindet. Dabei werden die Anschlussfahnen angeschmolzen. Das schmelzflüssige Blei wird anschließend unter Ausbildung einer Bleibrücke verfestigt, die die Anschlussfahnen untereinander und mit dem vorgefertigten Verbindungselement verbindet. Ein Beispiel eines Verbindungselementes, das zum Brückenangussverfahren geeignet ist, zeigt EP 2 080 240 B1.

Das Überkopfhängen des Plattenblockes verhindert während des Brückenangussverfahrens das Eindringen von Blei in den Plattenblock. Allerdings sind die Maschinen, die für die Ausführung des Verfahrens erforderlich sind, sehr teuer, was die Herstellung von Batterien mittels dieses Verfahrens erheblich verteuert. Andererseits stellt eben dieses Verfahren sicher, dass kein Blei in den Plattenblock gelangen kann.

Aufgabe der Erfindung ist es, die Nachteile nach dem Stand der Technik zu beseitigen. Es soll insbesondere eine Batterie angegeben werden, bei der die Anschlussfahnen gleichpoliger Platten untereinander und mit einem vorgefertigten Verbindungselement elektrisch leitend mittels einer Bleibrücke verbunden sind, und zwar ohne Anwendung des bekannten Brückenangussverfahrens, insbesondere ohne Überkopfhängung der Platten während der Ausführung des Brückenangussverfahrens. Ferner sollen ein Verbindungselement und ein Verfahren zur Herstellung einer solchen Batterie angegeben werden.

Diese Aufgabe wird durch die Merkmale der Ansprüche 1, 11 und 13 gelöst. Zweckmäßige Ausgestaltungen der Erfindungen ergeben sich aus den Merkmalen der Unteransprüche.

Nach Maßgabe der Erfindung ist ein Verbindungselement zum elektrischen Verbinden von Anschlussfahnen gleichpoliger Platten von Batterien vorgesehen, das einen an seiner Oberseite offenen Grundkörper mit einem Boden und Seitenwänden umfasst, die einen Innenraum umschließen, wobei in dem Boden des Grundkörpers Schlitze zur Hindurchführung der Anschlussfahnen in den Innenraum ausgebildet sind und wobei an einer Flächenseite des Bodens eine Barriereschicht aufgebracht ist, die die Schlitze vor Einführung der Anschlussfahnen in den Innenraum des Grundkörpers verschließt.

Der Grundkörper ist vorzugsweise ein einstückiges Formteil. Der Grundkörper kann aus Blei bestehen. Der Grundkörper weist einen Boden und Seitenwände auf, die einen Innenraum umschließen, der an seiner Oberseite offen ist. Der Grundkörper kann beispielsweise wannenförmig ausgebildet sein. Der Ausdruck "Boden" bezieht sich dabei auf eine Wand des Grundkörpers, die den Platten der Batterie zugewandt ist. Von dem Boden erstrecken sich die Seitenwände in einer Richtung, die von den Platten wegführt. Der Grundkörper ist beispielsweise ein wannenförmiger Grundkörper.

In dem Boden des Grundkörpers sind Schlitze ausgebildet, durch die die Anschlussfahnen gleichpoliger Platten der Batterie in den Innenraum geführt werden können. Die Form der Schlitze wird von der Form der Anschlussfahnen bestimmt. Typischerweise sind die Schlitze länglich, in äquidistanten Abständen in dem Boden angeordnet und von den Rändern des Bodens beabstandet. Die Längen- und Breitenausdehnung der Schlitze ist dabei so gewählt, dass sie geringfügig größer als die Querschnitte der Anschlussfahnen sind, um das Führen der Anschlussfahnen durch die Schlitze zu erleichtern. Andererseits sollen die Längen- und Breitenausdehnung der Schlitze die Querschnitte der Anschlussfahnen nicht zu stark überschreiten, um den Raum zwischen den Wänden der Schlitze im Boden und den Anschlussfahnen so klein wie möglich zu halten, so dass die Menge an verflüssigtem Blei, das durch diesen Raum aus dem Innenraum nach außen gelangen kann, möglichst gering ist. Dieser Raum wird von der Barriereschicht nach der Einführung der Anschlussfahnen in den Innenraum des Grundkörpers verschlossen.

Vorzugsweise weist die Barriereschicht, die die Schlitze vor Einführung der Anschlussfahnen in den Innenraum des Grundkörpers verschließt, Einschnitte auf, die das Führen der Anschlussfahnen durch die Barriereschicht in die Schlitze des Grundkörpers erleichtern sollen. Solche Einschnitte sind jedoch nicht erforderlich. Es kann vorgesehen sein, dass die Barriereschicht durchstoßen wird, wenn die Anschlussfahnen in den Innenraum des Grundkörpers eingeführt werden. Sind Einschnitte ausgebildet, so kann es sich dabei beispielsweise um Stanzungen, Kerbungen oder Perforationen handeln. Die Einschnitte sind vorzugsweise fluchtend zu den Schlitzen im Boden des Grundkörpers in der Barriereschicht ausgebildet. Die Länge der Einschnitte sollte annährend der Länge der Schlitze entsprechen. Die Breite der Einschnitte soll jedoch so gering wie möglich sein. Vorzugsweise sind die Einschnitte ohne Materialverlust in die Barriereschicht eingebracht worden, so dass die Längsränder der Einschnitte in Kontakt miteinander bleiben. Zweckmäßigerweise sind in der Barriereschicht lediglich Einkerbungen eingebracht, aus denen beim Aufbringen des Verbindungselementes auf die Platten die Einschnitte entstehen.

Die Barriereschicht ist vorzugsweise auf die Unterseite des Bodens aufgebracht, das heißt die Seite des Bodens, die den Platten zugewandt ist. Nach dem Einbringen der Anschlussfahnen der Platten durch die Barriereschicht und die Schlitze im Boden des Grundkörpers liegt die Barriereschicht eng an den Anschlussfahnen an. Sie verhindert damit, dass verflüssigtes Blei, das aus dem Innenraum durch den Raum zwischen den Anschlussfahnen und den Wänden der Schlitze gelangen kann, in die Platten eindringt. Aufgrund dieser Barriereschicht ist es möglich, die Anschlussfahnen in dem Innenraum des Grundkörpers mit verflüssigtem Blei unter Ausbildung von Bleibrücken untereinander und mit dem Grundkörper elektrisch leitend zu verbinden, ohne dass eine Überkopfhängung des Plattenblockes wie beim Brückenanguss- oder Cast-on-strap-Verfahren erforderlich ist. Vielmehr können die Bleibrücken zwischen den Anschlussfahnen und dem Grundkörper ausgebildet werden, während der Plattenblock aufrecht stehend angeordnet ist, d. h. sich die Oberkanten der Platten, an der die Anschlussfahnen ausgebildet sind, tatsächlich oben befinden. Ferner erlaubt die erfindungsgemäße Verbindungsvorrichtung eine Einsparung an Blei, da das Blei in dem Innenraum des Grundkörpers gehalten wird.

Es kann vorgesehen sein, dass in den Innenraum des Verbindungselementes granuläres Blei eingefüllt ist. Enthält der Innenraum bereits Blei in granulärer Form bevor die Anschlussfahnen der Platten in den Innenraum eingeführt werden, so kann dieses Blei zur Ausbildung der Bleibrücken genutzt werden. Das Blei sollte in granulärer Form vorliegen, um das Einführen der Anschlussfahnen in den Innenraum nicht zu behindern. Zum Ausbilden der Bleibrücken wird das Blei dann in die schmelzflüssige Form überführt. Die Schmelze verteilt sich oberhalb des Bodens des Grundkörpers zwischen den Anschlussfahnen, wobei die Barriereschicht verhindert, dass Blei in die Platten eindringt. Mit dem Aushärten des Bleis entsteht eine elektrisch leitende Brücke zwischen den Anschlussfahnen untereinander und mit dem Grundkörper.

Neben granulärem Blei können in den Innenraum des Grundkörpers weitere Substanzen eingebracht werden, die die Ausbildung der Bleibrücke erleichtern. Dabei kann es sich beispielsweise um Lötpaste handeln.

Vorteilhafterweise wird das granuläre Blei nach dem Einführen der Anschlussfahnen in den Innenraum des Grundkörpers durch induktive Erwärmung verflüssigt. Zu diesem Zweck ist in einer bevorzugten Ausführungsform vorgesehen, dass in den Innenraum des Grundkörpers eine Einrichtung zur Verflüssigung des Bleis eingebracht ist. Dabei kann es sich um einen Körper, beispielsweise in Form einer Platte, die mit ihren Flachseiten parallel zum Boden ausgerichtet und von den Innenseiten des Bodens und der Seitenwände beabstandet ist, handeln. Dieser Körper kann dann mittels eines Induktors, der außerhalb des Verbindungselementes angeordnet ist, erwärmt werden. Der Körper kann aus jedem Material, insbesondere jedem magnetischen oder nichtmagnetischen Material bestehen, das sich nach dem Stand der Technik mittels Induktionserwärmung erwärmen lässt. Auf diese Weise wird die Verflüssigung des Bleis vereinfacht und dafür gesorgt, dass die Temperatur der Masse des verflüssigten Bleis sich, ausgehend von der Einrichtung, in Richtung der Ränder des Innenraumes verringert, wodurch es weiter erschwert wird, dass Blei durch den Raum zwischen den Schlitzen im Boden des Grundkörpers und den Anschlussfahnen bis zu der Barriereschicht an der Unterseite des Bodes gelangt.

Alternativ kann in einer Ausführungsform der Erfindung vorgesehen sein, dass das granuläre Blei nach dem Einführen der Anschlussfahnen in den Innenraum des Grundkörpers durch Widerstandsheizung verflüssigt wird. Dazu kann in dem Innenraum ein metallischen Körper, beispielsweise in Form einer Platte oder eine Heizwendels, angeordnet sein. Dieser Körper kann über Leitungen, die aus dem Innenraum hinausgeführt sind, mit elektrischem Strom versorgt werden. Auf diese Weise wird die Verflüssigung des Bleis vereinfacht und dafür gesorgt, dass die Temperatur der Masse des verflüssigten Bleis sich, ausgehend von der Einrichtung, in Richtung der Ränder des Innenraumes verringert, wodurch es weiter erschwert wird, dass Blei durch den Raum zwischen den Schlitzen im Boden des Grundkörpers und den Anschlussfahnen bis zu der Barriereschicht an der Unterseite des Bodens gelangt.

An der Oberseite des Grundkörpers des erfindungsgemäßen Verbindungselementes kann eine Decklage angebracht sein, die den Innenraum abschließt. Der Innenraum wird dann von dem Boden, den Seitenwänden und dieser Folie vollständig umschlossen. In diesem Falle kann sichergestellt werden, dass das granuläre Blei und, falls vorhanden, die weiteren Substanzen, die in den Innenraum eingebracht worden sind, nicht herausfallen. Dies gilt gleichermaßen, wenn eine Einrichtung zur Verflüssigung des granulären Bleis in den Innenraum eingebracht worden ist. Die Decklage an der Oberseite des Grundkörpers kann vor oder nach dem Einführen der Anschlussfahnen der Platten in den Innenraum entfernt werden. Bei der Decklage kann es sich um eine Folie handeln, die im Folgenden als Deckfolie bezeichnet wird.

Bei der Barriereschicht, die an einer Flächenseite des Bodens des Grundkörpers aufgebracht ist, kann es sich beispielsweise um eine Folie oder um eine spritzgegossene Schicht handeln. Die Stärke der Barriereschicht liegt in einer Ausführungsform der Erfindung zwischen 0,5 und 3 mm. Die spritzgegossene Barriereschicht kann mittels Spritzgießens aus einem Kunststoff hergestellt sein. Dabei kann der Grundkörper an seinen Außenseiten, also den Seiten der Seitenwände und des Bodens, die dem Innenraum abgewandt sind, mit einer Barriereschicht aus Kunststoff umspritzt sein. Die erfindungsgemäß vorgesehene Schicht, die an einer Flächenseite des Bodens des Grundkörpers aufgebracht ist, ist dann Teil dieser Umspritzung.

Ist die Barriereschicht eine Folie, so kann es sich um eine Kunststoff- oder Metallfolie, beispielsweise eine Polypropylen- oder Bleifolie handeln. Die Folie kann mittels eines Laminierverfahens auf den Boden des Grundkörpers aufgebracht werden. Dazu kann die Folie auf ihrer dem Boden zugewandten Seite haftend ausgerüstet sein, beispielsweise mit einem Klebstoff beschichtet sein.

Ebenso kann es sich bei der Decklage, die den Innenraum des Grundkörpers an seiner Oberseite abschließt, um eine Kunststoff- oder Metallfolie, beispielsweise eine Polypropylen- oder Bleifolie handeln. Die Stärke der Decklage liegt in einer Ausführungsform der Erfindung zwischen 0,5 und 3 mm. Die Decklage kann mittels eines Laminierverfahrens auf die dem Boden abgewandten Ränder der Seitenwände aufgebracht sein. Dazu kann die Decklage auf ihrer den Rändern zugewandten Seite haftend ausgerüstet sein, beispielsweise mit einem Klebstoff beschichtet sein.

In einer Ausführungsform der Erfindung ist vorgesehen, dass der Grundkörper vollständig von einer Hülle umgeben ist, die an der Unterseite des Bodens und den Au-βenseiten der Seitenwände anliegt. In diesem Fall ist die Barriereschicht, die an einer Flächenseite des Bodens des Grundkörpers aufgebracht ist, ein Teil der Hülle. Die Hülle kann ferner den Innenraum des Grundkörpers an seiner Oberseite abschließen. Die Decklage, die den Innenraum des Grundkörpers an seiner Oberseite abschließt, ist dann ein Teil der Hülle. Bei der Hülle kann es sich um eine Hülle aus Kunststoff oder Metall, beispielsweise aus Polypropylen oder Bleihandeln. In einer Ausführungsform ist der Grundkörper vollständig mit einer Kunststoff-Schicht umspritzt, wobei der Innenraum erhalten bleibt. In diesem Fall sind die Barriereschicht, die an einer Flächenseite des Bodens des Grundkörpers aufgebracht ist, und die Decklage, die den Innenraum des Grundkörpers an seiner Oberseite abschließt, ein Teil der Hülle. Die Stärke der Hülle liegt in einer Ausführungsform der Erfindung zwischen 0,5 und 3 mm.

In einer Ausführungsform der Erfindung ist vorgesehen, dass der Batteriepol Bestandteil des Verbindungselements ist. In diesem Fall kann der Batteriepol oder ein Teil davon in die Hülle des Grundkörpers eingegossen sein.

Es kann ferner vorgesehen sein, dass am Boden des erfindungsgemäßen Verbindungselementes ein oder mehrere Abstandshalter ausgebildet sind. Diese Abstandshalter ermöglichen es, den optimalen Abstand zwischen dem Boden des Grundkörpers und der Oberkante der Platten des Plattenkörpers, auf die der Grundkörper unter Führung der Fahnen durch die Schlitze in dessen Innenraum aufgesteckt wird, einzustellen. Die Abstandshalter sind in einer Ausführungsform an die Barriereschicht angeformt. Handelt es sich bei der Barriereschicht um eine spritzgegossene Schicht, beispielsweise als Teil der Hülle, so können der oder die Abstandshalter gemeinsam mit der Barriereschicht oder gemeinsam mit der Hülle hergestellt werden. Bei dem Abstandshalter kann es sich um einen Körper aus Kunststoff handeln. In diesem Kunststoffkörper können Kanäle ausgebildet sein, durch die die Fahnen gleichpoliger Platten des Plattenkörpers geführt werden können. Dazu sind die Kanäle zweckmäßigerweise fluchtend zu den Schlitzen im Boden des Grundkörpers und den Einschnitten in der Barriereschicht angeordnet. Die Kanäle erstrecken sich dabei von der Flachseite des Körpers, die sich in Kontakt mit der Barriereschicht befindet, zu einer Außenfläche des Körpers, die dieser Flachseite gegenüberliegt. Die Kanäle sind sowohl an der Flachseite als auch an der Außenseite des Körpers offen, um die Fahnen der Platten hindurchführen zu können.

Alternativ können Stege vorgesehen sein, die sich im Wesentlichen orthogonal zum Boden des Grundkörpers und von diesem weg erstrecken.

Die Barriereschicht und der oder die Abstandshalter können einstückig ausgebildet sein, beispielsweise durch Spritzgießen. Ist eine Hülle vorgesehen, die die Barriereschicht und die Decklage umfasst, können Hülle und Abstandshalter einstückig ausgebildet sein, beispielsweise durch Spritzgießen.

Der Grundkörper des Verbindungselementes kann im Übrigen Merkmale bekannter Verbindungselemente aufweisen. Beispielsweise können in den Außenflächen seiner Seitenwände Riffelungen ausgebildet sein, die einen Einguss des Verbindungselementes in Kunststoff nach dem Ausbilden der Bleibrücken in seinem Innenraum erleichtern sollen. Ferner kann der Grundkörper eine Ausformung zur Aufnahme eines Batteriepols aufweisen.

Nach Maßgabe der Erfindung ist ferner eine Batterie, insbesondere eine Blei-Säure-Batterie, mit einem Gehäuse, in das zumindest ein Plattenblock mit alternierend angeordneten positiven und negativen Platten eingesetzt ist, an deren Oberkanten Anschlussfahnen zur Verbindung gleichpoliger Platten ausgebildet sind, und Verbindungselementen zum elektrischen Verbinden gleichpoliger Platten vorgesehen, wobei ein Verbindungselement einen an seiner Oberseite offenen Grundkörper mit einem den Platten zugewandten Boden und Seitenwänden umfasst, die einen Blei enthaltenden Innenraum umschließen, wobei sich in dem Boden des Grundkörpers Schlitze befinden, durch die die Anschlussfahnen gleichpoliger Platten in den Innenraum geführt sind, und die Anschlussfahnen in dem Innenraum über das dort enthaltene Blei miteinander und mit dem Grundkörper elektrisch leitend verbunden sind, und dass das Verbindungselement ferner eine Barriereschicht aufweist, die an einer Flächenseite des Bodens aufgebracht ist und durch die die Anschlussfahnen der gleichpoligen Platten geführt sind. Vorzugsweise weist die Barriereschicht fluchtend zu den Schlitzen des Grundkörpers Einschnitte auf, durch die die Anschlussfahnen der gleichpoligen Platten geführt sind.

Die erfindungsgemäße Batterie weist vorzugsweise die erfindungsgemäßen Verbindungselemente auf. Im Übrigen entspricht der Aufbau der Batterie bekannten Batterien.

Nach Maßgabe der Erfindung ist ferner ein Verfahren zur Herstellung einer Batterie vorgesehen, das das Führen der Anschlussfahnen der gleichpoligen Platten durch die Barriereschicht und die Schlitze im Boden des Grundkörpers in die Verbindungselemente umfasst. Das Verfahren kann ferner das Erwärmen von granulärem Blei, das sich in den Innenräumen der Verbindungselemente befindet, zur elektrisch leitenden Verbindung der Anschlussfahnen der gleichpoligen Platten miteinander und mit dem Grundkörper umfassen.

Zur Ausführung des erfindungsgemäßen Verfahrens können die Verbindungselemente von oben auf die gleichpoligen Platten unter Führung der Anschlussfahnen der gleichpoligen Platten durch die Barriereschicht und die Schlitze im Boden des Grundkörpers aufgesteckt werden. Nach dem Aufstecken der Verbindungselemente kann granuläres Blei, das sich in dem Innenraum befindet, zur elektrischen Verbindung der Anschlussfahnen gleichpoliger Platten untereinander und mit dem Verbindungselement verflüssigt werden, beispielsweise indem das granuläre Blei, das sich in dem Innenraum des Grundkörpers befindet, induktiv erwärmt wird. Dazu kann in dem Innenraum beispielsweise eine Induktionsheizung, beispielsweise eine Induktionsspule, angeordnet sein.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine perspektivische Darstellung einer ersten Ausführungsform des erfindungsgemäßen Verbindungselementes;
- Fig. 2: eine schematische Schnittdarstellung der in Fig. 1 gezeigten Ausführungsform des erfindungsgemäßen Verbindungselementes;
- Fig. 3: eine Ansicht der in Fig. 1 gezeigten Ausführungsform des erfindungsgemäßen Verbindungselementes von oben;
- Fig. 4: eine schematische Ansicht einer zweiten Ausfiihrungsform des erfindungsgemäßen Verbindungselementes von unten;
- Fig. 5: eine schematische Schnittdarstellung einer dritten Ausführungsform des erfindungsgemäßen Verbindungselementes;
- Fig. 6: eine schematische Darstellung einer Ausführungsform der erfindungsgemäßen Batterie;
- Fig. 7: eine schematische Schnittdarstellung einer vierten Ausführungsform des erfindungsgemäßen Verbindungselementes zur Veranschaulichung des erfindungsgemäßen Verfahrens;
- Fig. 8: eine weitere schematische Schnittdarstellung der vierten Ausführungsform, des erfindungsgemäßen Verbindungselementes zur Veranschaulichung des erfindungsgemäßen Verfahrens;
- Fig. 9: eine weitere schematische Schnittdarstellung der vierten Ausführungsform, des erfindungsgemäßen Verbindungselementes zur Veranschaulichung des erfindungsgemäßen Verfahrens;
- Fig. 10: eine weitere schematische Schnittdarstellung der vierten Ausführungsform des erfindungsgemäßen Verbindungselementes zur Veranschaulichung des erfindungsgemäßen Verfahrens;
- Fig. 11: eine schematische Schnittdarstellung einer fünften Ausführungsform des erfindungsgemäßen Verbindungselementes;
- Fig. 12: eine schematische Schnittdarstellung einer sechsten Ausführungsform des erfindungsgemäßen Verbindungselementes;
- Fig. 13: eine schematische Schnittdarstellung einer siebten Ausführungsform des erfindungsgemäßen Verbindungselementes; und
- Fig. 14: eine schematische Schnittdarstellung einer achten Ausführungsform des erfindungsgemäßen Verbindungselementes.

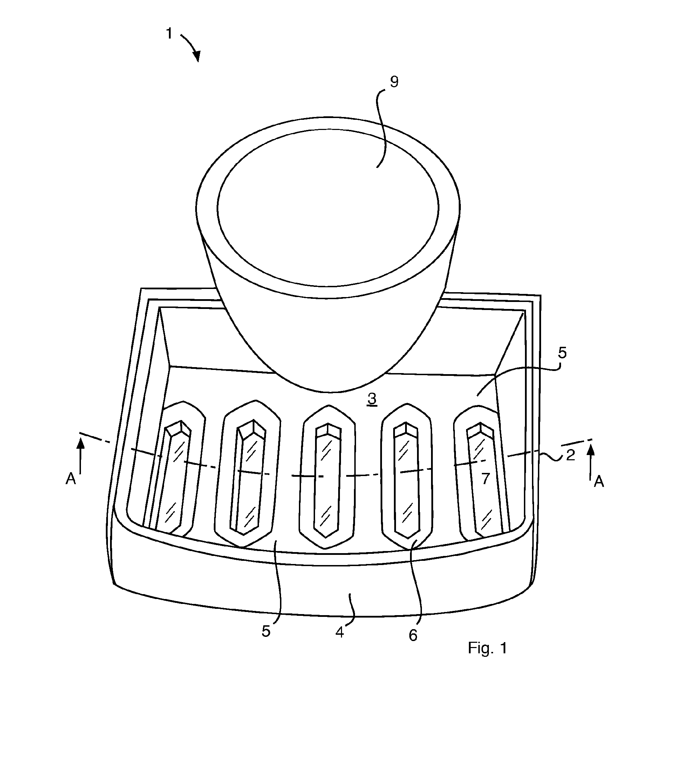

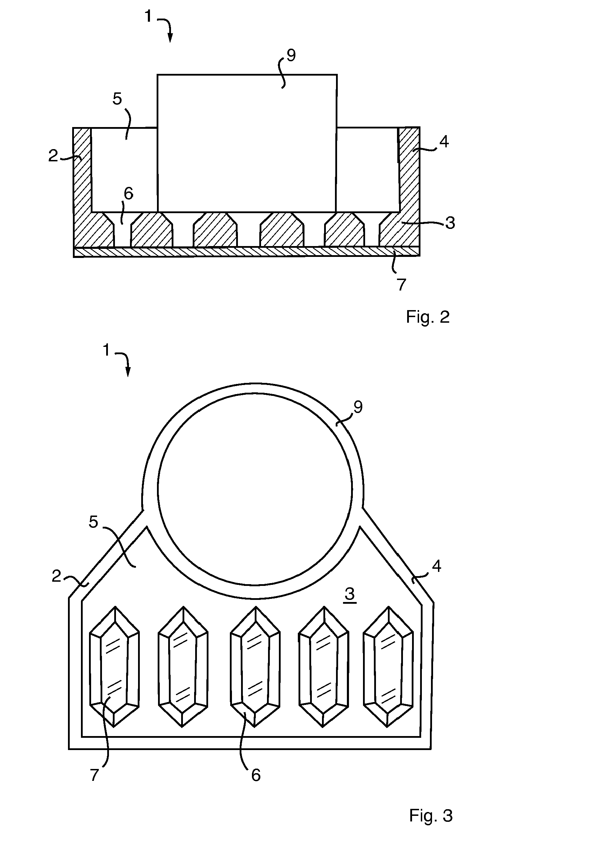

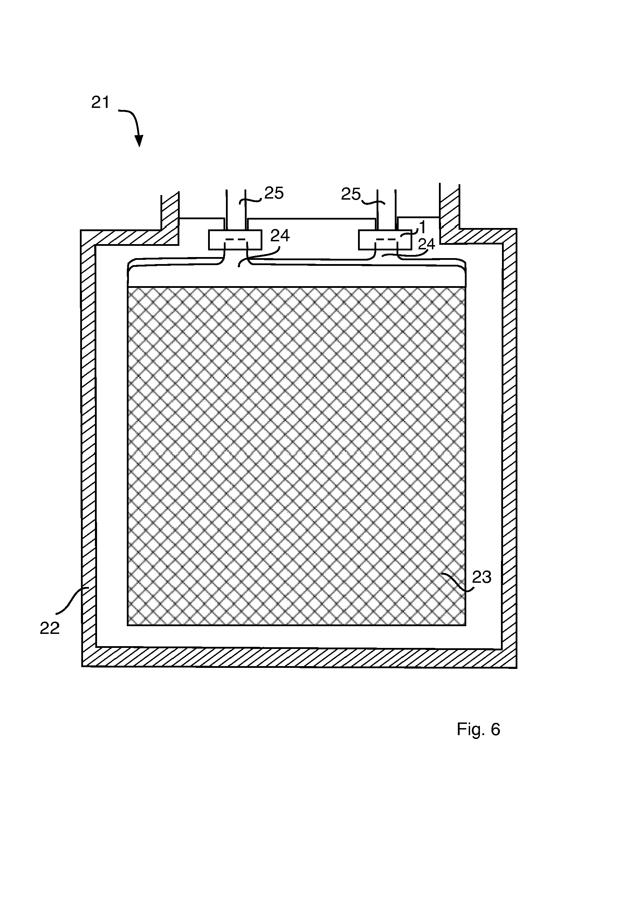

Die in den Figuren 1 bis 5 gezeigten Ausführungsformen des erfindungsgemäßen Verbindungselementes weisen einen Grundkörper 2 mit einem Boden 3 und Seitenwänden 4, die einen Innenraum 5 umgeben, der an seiner Oberseite offen ist, auf. Im Boden 3 des Grundkörpers 2 befinden sich Schlitze 6, durch die Anschlussfahnen 24 gleichpoliger Platten 23 eines Plattenblocks, der in das Gehäuse 22 einer Batterie 21 eingesetzt ist, geführt sind (siehe auch Fig. 6).

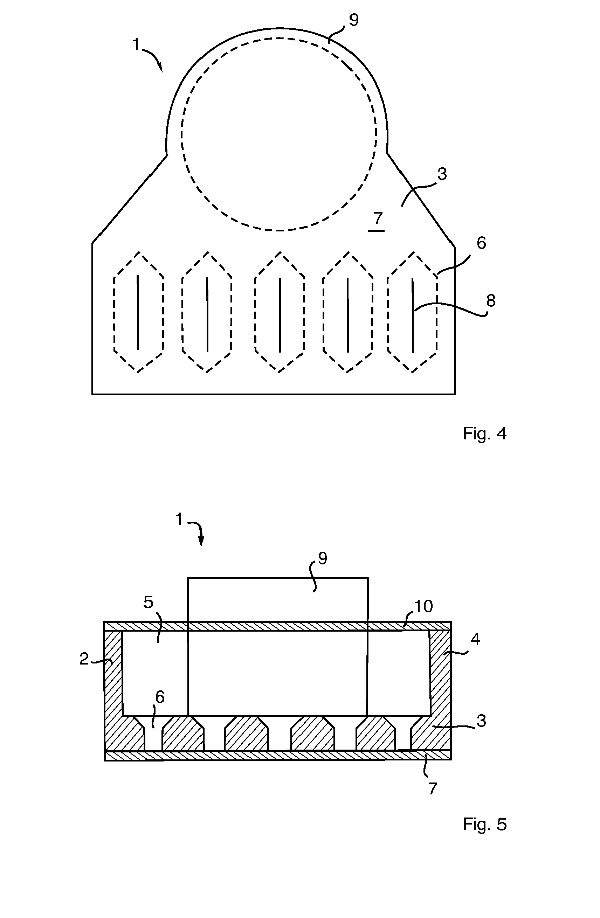

An der Unterseite des Bodens 3, d. h. der Seite des Bodens 3, die nach dem Einführen der Anschlussfahnen 24 in den Innenraum des Grundkörpers 2 dem Plattenblock zugewandt ist, ist eine Folie 7 als Barriereschicht aufgebracht, die die Schlitze 6 verschließt. Die Folie 7 wird beim Einführen der Abschlussfahnen 24 in den Innenraum 5 durchstoßen. Sie kann daher Einschnitte 8 aufweisen, die das Führen der Anschlussfahnen 24 durch die Folie 7 erleichtern können, wie in Fig. 4 gezeigt ist. Nach Einführen der Anschlussfahnen 24 in den Innenraum 5 des Grundkörpers 2 liegt die Folie 7 eng an den Anschlussfahnen 24 an. Dadurch wird verhindert, dass schmelzflüssiges Blei in den Plattenblock gelangt, wenn in dem Innenraum 5 Bleibrücken zwischen den Anschlussfahnen 24 durch Schmelzen und Aushärten von Blei ausgebildet werden.

Die in Fig. 4 gezeigte zweite Ausführungsform entspricht der in den Figuren 1 bis 3 gezeigten Ausführungsform, außer dass zusätzlich Einschnitte 8 in die Folie 7 eingebracht sind. Die Einschnitte 8 sind fluchtend zu den Schlitzen 6 angeordnet. In Fig. 4 verlaufen sie entlang der Längsachse der Schlitze 6, bezogen auf die Flächenausdehnung des Bodens 3.

Die in den Figuren 1 bis 5 gezeigten Ausführungsformen des erfindungsgemäßen Verbindungselementes 1 weist ferner eine ringförmige Ausformung 9 zur Aufnahme eines Batteriepols 25 (siehe Fig. 6) auf.

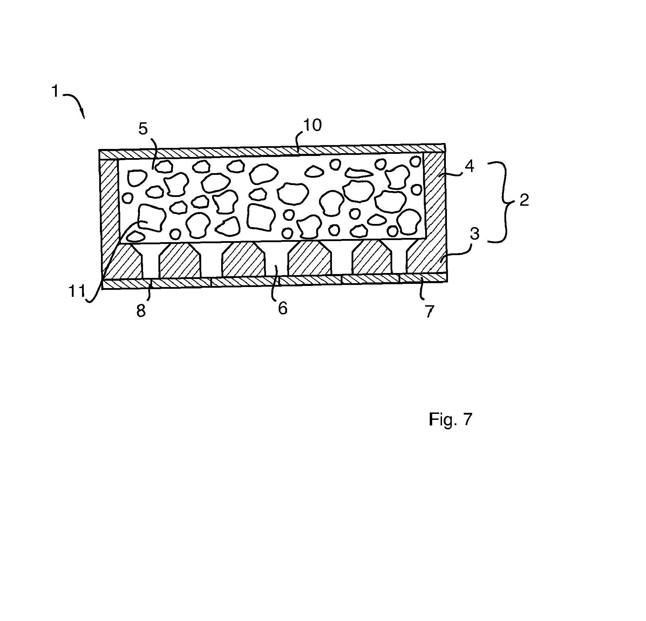

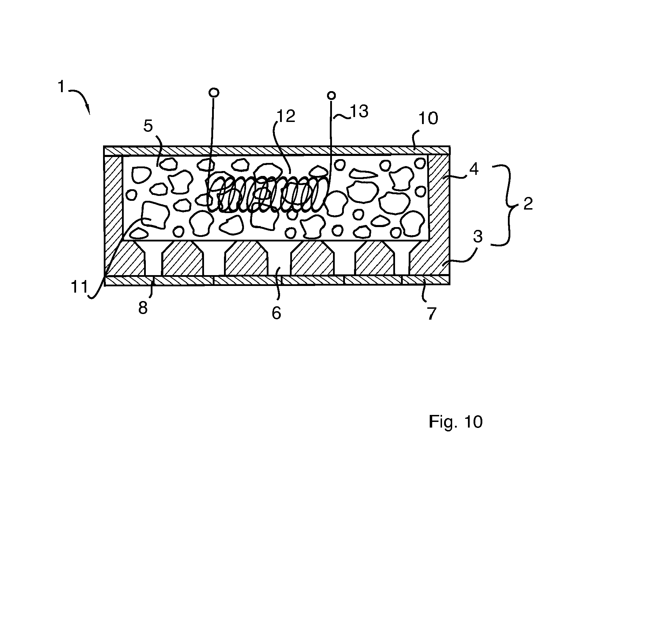

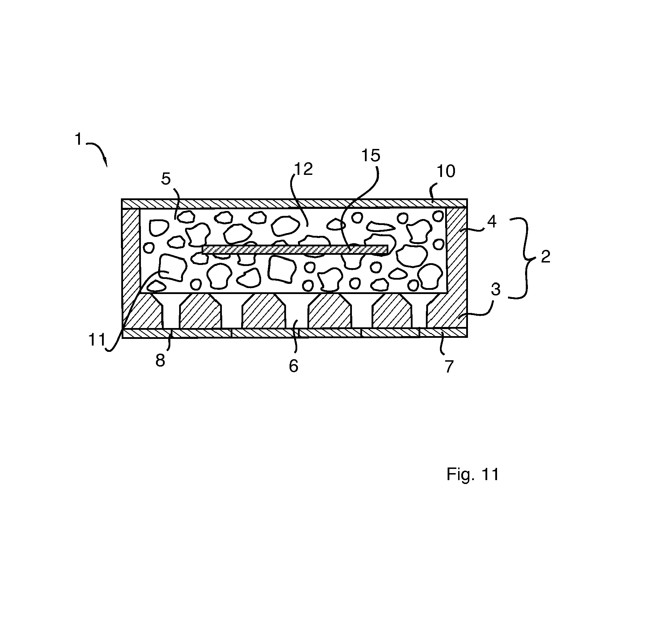

In den Innenraum 5 kann granuläres Blei 11 (siehe Fig. 7) eingebracht sein, das zum Herstellen von Bleibrücken zwischen den Anschlussfahnen 24 gleichpoliger Platten im Innenraum 5 des Grundkörpers 2 verflüssigt und dann ausgehärtet werden kann. Zu diesem Zweck können neben granulärem Blei 11 auch weitere Substanzen, die nach dem Stand der Technik zum Ausbilden von Bleibrücken eingesetzt werden, in den Innenraum 5 eingebracht sein. Ein Beispiel einer solchen Substanz ist Lötpaste. Zum Verflüssigen des granulären Bleis 11 kann schließlich in dem Innenraum 5 eine Widerstandsheizung 12 angeordnet sein (siehe Fig. 10). Die Widerstandsheizung 12 kann mittels Leitungen 13, die aus dem Innenraum 5 herausführen, mit elektrischem Strom versorgt werden. Alternativ kann eine Verflüssigung des Bleis 11 durch induktive Erwärmung einer Platte 15 (siehe Fig. 11) vorgesehen sein.

Der Grundkörper 2 kann an seiner Oberseite mit einer weiteren Folie 10 als Decklage bedeckt sein, die den Innenraum 5 des Grundkörpers 2 abschließt (siehe Fig. 5). Dabei kann die Folie 10 auf den Rändern der Seitenwände 4 befestigt sein, d. h. den Rändern der Seitenwände 4, die dem Boden 3 abgewandt sind. Die Folie 10 sorgt dabei dafür, dass granuläres Blei 11, das in den Innenraum 5 eingebracht ist, nicht aus dem Innenraum 5 herausfallen kann, beispielsweise nach Herstellung des erfindungsgemäßen Verbindungselementes 1 vor dessen Aufstecken auf die Anschlussfahnen 24 gleichpoliger Platten 23 eines Plattenblockes.

Die in Fig. 5 gezeigte dritte Ausführungsform entspricht der in den Figuren 1 bis 3 gezeigten ersten Ausführungsform oder der in Fig. 4 gezeigten zweiten Ausführungsform, außer dass zusätzlich die weitere Folie 10 vorgesehen ist.

Im Folgenden wird ein Verfahren zur Verbindung gleichpoliger Platten 23 eines Plattenblockes für eine Batterie 21 unter Verwendung einer vierten Ausführungsform des Verbindungselementes 1 beschrieben. Die vierte Ausführungsform entspricht der in Fig. 5 gezeigten Ausführungsform, außer dass zusätzlich Einschnitte 8 in der Folie 7, die auf die Unterseite des Bodens 3 des Grundkörpers 2 aufgebracht ist, eingebracht sind.

Zur Vereinfachung der Darstellung ist in den Figuren 7 bis 10 die Ausformung 9 zur Aufnahme eines Pol 25 nicht gezeigt.

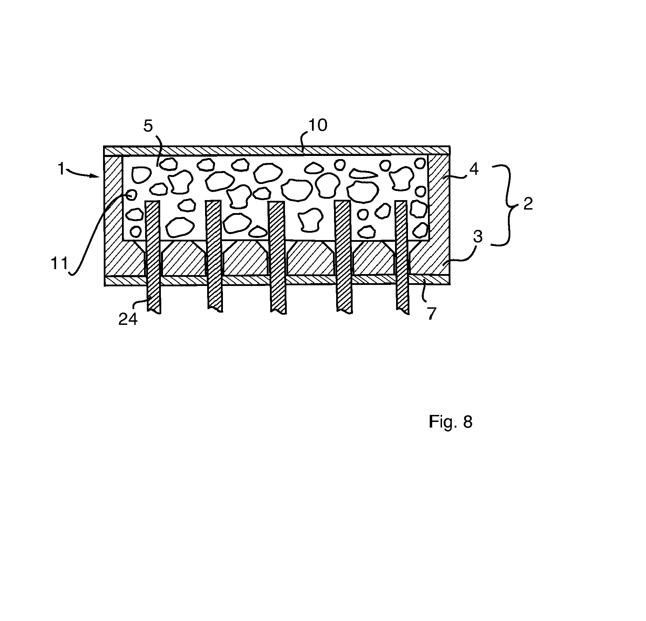

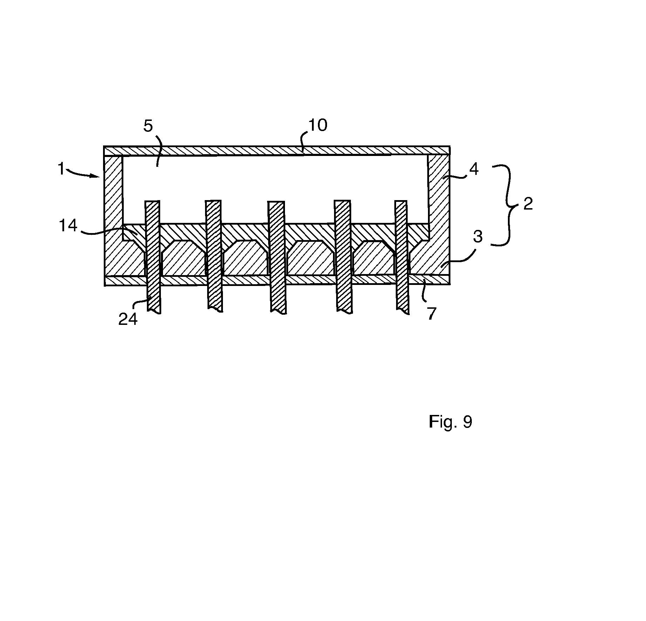

Es ist in Fig. 7 zu erkennen, dass sich im Innenraum 5 des Grundkörpers 2 granuläres Blei 11 in Form von Bleigranalien befindet. Nun werden, wie in Fig. 8 gezeigt, die Anschlussfahnen 24 gleichpoliger Platten 23 eines Plattenkörpers für eine Batterie 21 von unten durch die Einschnitte 8 in der Folie 7 und die Schlitze 6 im Boden 3 des Grundkörpers 2 in dessen Innenraum 5 eingeführt. Dabei werden die Bleigranalien 11 von den eindringenden Anschlussfahnen 24 so verdrängt, dass sie zwischen den Anschlussfahnen 24 einerseits und den Anschlussfahnen 24 und den Seitenwänden 4 des Grundkörpers 2 auf der Oberseite des Bodens 3 zu liegen kommen. Gleichzeitig liegt die Folie 7 an der Unterseite des Bodens 3 an den Anschlussfahnen 24 an, wodurch die Schlitze 6 auch nach Einführung der Anschlussfahnen 24 in den Innenraum zu den Platten 23 des Plattenkörpers hin verschlossen sind. Die Bleigranualien 11 werden unter Zuführung von Wärmeenergie geschmolzen, wobei sich die Schmelze zwischen den Anschlussfahnen 24 einerseits und den Anschlussfahnen 24 und den Seitenwänden 4 des Grundkörpers 2 auf der Oberseite des Bodens 3 ausbreitet. Beim Abkühlen der Schmelze wird eine Bleibrücke 14 erhalten, die die eingeführten Anschlussfahnen 24 untereinander und mit dem Grundkörper 2 des Verbindungselementes 1 elektrisch leitend verbindet (Fig. 9).

Die erforderliche Wärmeenergie kann beispielsweise mittels der in Fig. 10 gezeigten Widerstandsheizung 12, die über die Leitungen 13 mit elektrischem Strom versorgt werden kann, erzeugt werden. Alternativ kann die erforderliche Wärmeenergie beispielsweise mittels induktiver Erwärmung erzeugt werden. Zu diesem Zweck ist in der in Fig. 11 gezeigten Ausführungsform eine Platte 15 aus einem magnetischen Material eingebracht, die mittels eines Induktors der außerhalb des erfindungsgemäßen Verbindungselementes 1 angeordnet ist, erwärmt werden kann.

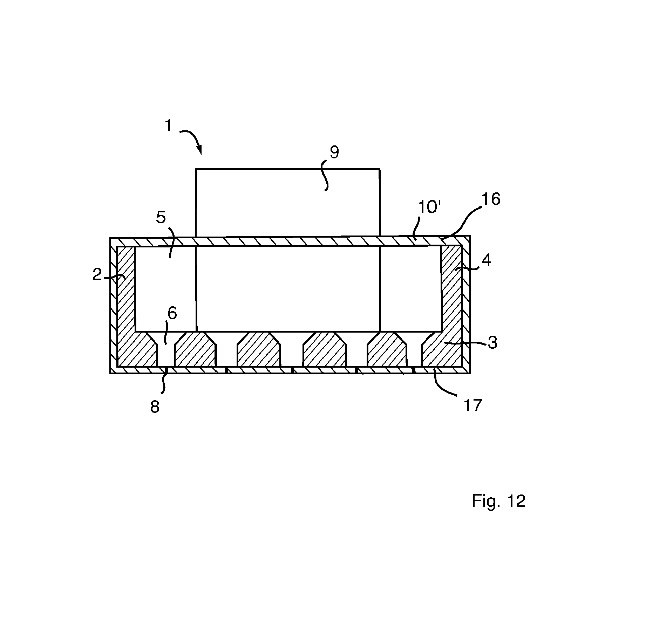

Die in Fig. 12 gezeigte, sechste Ausführungsform eines erfindungsgemäßen Verbindungselementes entspricht der ersten Ausführungsform, außer dass anstelle einer Folie 7 eine Hülle 16 vorgesehen ist, die an den Außenseiten des Bodens 3 und der Seitenwände 4 anliegt. Die Barriereschicht wird somit von einer Schicht 17 gebildet, die Teil der Hülle 16 ist. In der Schicht 17 können ebenso wie in der Folie 7, die in den Figuren 1 bis 11 gezeigt wird, Einschnitte 8 ausgebildet sein. Auch die Decklage 10' wird durch die Hülle 16 gebildet. Die Hülle 16 ist durch Umspritzen des Grundkörpers 2 mit einem Kunststoff ausgebildet worden. Auch in dieser Ausführungsform kann Innenraum 5 granuläres Blei 11, Lötpaste und/oder eine Einrichtung zur Verflüssigung des Bleis 11 enthalten.

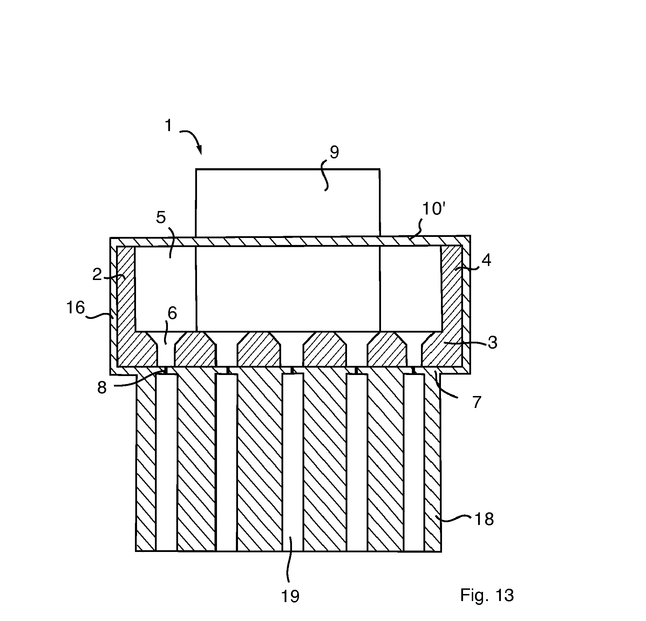

Die in Fig. 13 gezeigte, siebente Ausführungsform eines erfindungsgemäßen Verbindungselementes entspricht der sechsten Ausführungsform, außer dass zusätzlich ein Abstandshalter 18 an der Schicht 17 ausgebildet ist. Der Abstandshalter 18 ist ein massiver Körper aus Kunststoff, der an die Hülle 16 angegossen ist und sich von der äußeren Flachseite der Schicht 17, also der Flachseite, die dem Boden 3 abgewandt ist, in orthogonaler Richtung zu dessen Flächenebene erstreckt. In dem Abstandshalter 18 sind Kanäle 19 zur Durchführung der Anschlussfahnen 24 gleichpoliger Platten 23 des Plattenkörpers ausgebildet. Hülle 16 und Abstandshalter 18 sind einstückig ausgebildet. Auch in dieser Ausführungsform kann Innenraum 5 granuläres Blei 11, Lötpaste und/oder eine Einrichtung zur Verflüssigung des Bleis 11 enthalten.

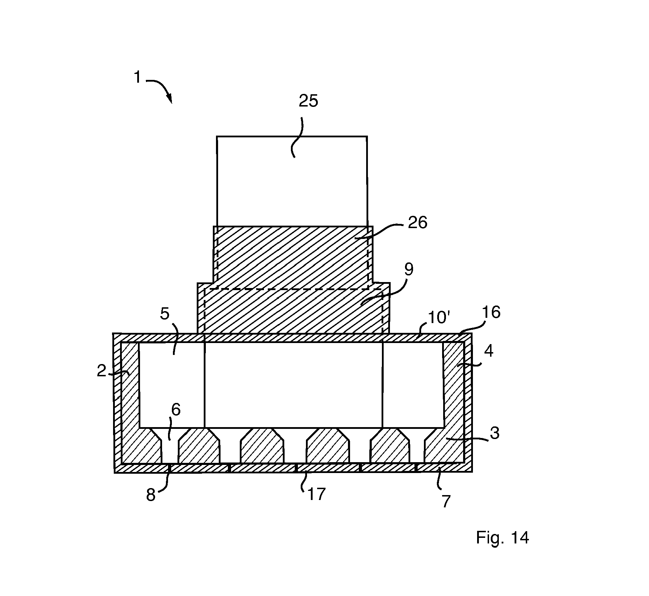

Die in Fig. 14 gezeigte, achte Ausführungsform eines erfindungsgemäßen Verbindungselementes entspricht der sechsten Ausführungsform, außer dass zusätzlich ein Pol 25 in die Ausnehmung des Grundkörpers 2 eingesetzt ist. Ein Abschnitt 26 des Pols 25, der dem Boden 3 des Grundkörpers 2 zugewandt ist, ist in dessen Hülle 16 eingegossen. Auch in dieser Ausführungsform kann Innenraum 5 granuläres Blei 11, Lötpaste und/oder eine Einrichtung zur Verflüssigung des Bleis 11 enthalten.

Eine Überkopfhalterung des Plattenblockes und damit der Platten ist zur Montage des Verbindungselementes 1 nicht erforderlich. Vielmehr sorgt die Barriereschicht für eine Abdichtung der Schlitze 6, so dass schmelzflüssiges Blei nicht in den Plattenblock eindringen kann.

### Bezugszeichenliste

- 1: Verbindungselement
- 2: Grundkörper
- 3: Boden
- 4: Seitenwand
- 5: Innenraum
- 6: Schlitz
- 7: Folie als Barriereschicht
- 8: Einschnitte
- 9: Ausformung zur Aufnahme für einen Pol
- 10: Folie als Decklage
- 11: granuläres Blei
- 12: Widerstandsheizung
- 13: Leitung
- 14: Bleibrücke
- 15: Platte aus magnetischen Material
- 16: Hülle
- 17: spritzgegossene Schicht als Barriereschicht
- 18: Abstandshalter
- 19: Kanäle
- 21: Batterie
- 22: Gehäuse
- 23: Platte
- 24: Anschlussfahne
- 25: Batteriepol
- 26: Umspritzter Abschnitt des Batteriepols

## Patentansprüche

1. Verbindungselement zum elektrischen Verbinden von Anschlussfahnen (24) gleichpoliger Platten (23) von Batterien (21), umfassend einen an seiner Oberseite offenen Grundkörper (2) mit einem Boden (3) und Seitenwänden (4), die einen Innenraum (5) umschließen, wobei in dem Boden (3) des Grundkörpers (2) Schlitze (6) zur Hindurchführung der Anschlussfahnen (24) in den Innenraum (5) ausgebildet sind und wobei an einer Flächenseite des Bodens (3) eine Barriereschicht (7, 17) aufgebracht ist, die die Schlitze (6) vor Einführung der Anschlussfahnen (24) in den Innenraum (5) des Grundkörpers (2) verschließt.

2. Verbindungselement nach Anspruch 1, **dadurch gekennzeichnet, dass** die Barriereschicht (7, 17) eine spritzgegossene Schicht (17) aus einem Kunststoff ist.

3. Verbindungselement nach Anspruch 1, **dadurch gekennzeichnet, dass** die Barriereschicht (7, 17) eine Folie (7) ist.

4. Verbindungselement nach einem der vorstehenden Ansprüche, **dadurch gekennzeichnet, dass** in der Barriereschicht (7, 17) fluchtend zu den Schlitzen (6) des Grundkörpers (2) Einschnitte (8) ausgebildet sind.

5. Verbindungselement nach einem der vorstehenden Ansprüche, **dadurch gekennzeichnet, dass** der Innenraum (5) des Grundkörpers (2) granuläres Blei (11) enthält.

6. Verbindungselement nach Anspruch 5, **dadurch gekennzeichnet, dass** der Innenraum (5) ferner Lötpaste enthält.

7. Verbindungselement nach Anspruch 5 oder Anspruch 6, **dadurch gekennzeichnet, dass** in dem Innenraum (5) eine Einrichtung (12, 15) zur Verflüssigung des Bleis (11) eingebracht ist.

8. Verbindungselement nach einem der vorstehenden Ansprüche, **dadurch gekennzeichnet, dass** der Innenraum (5) des Grundkörpers (2) an seiner Oberseite mit einer Decklage (10) abgeschlossen ist.

9. Verbindungselement nach einem der Ansprüche 3 bis 8, **dadurch gekennzeichnet, dass** die an einer Flächenseite des Bodens (3) angebrachte Folie (7) eine Kunststoff- oder Metallfolie ist.

10. Verbindungselement nach einem der vorstehenden Ansprüche, **dadurch gekennzeichnet, dass** es eine Hülle (16) aufweist, die den Grundkörper (2) umgibt.

11. Batterie, insbesondere Blei-Säure-Batterie, mit einem Gehäuse (22), in das zumindest ein Plattenblock mit alternierend angeordneten positiven und negativen Platten (23) eingesetzt ist, an deren Oberkanten Anschlussfahnen (24) zur Verbindung gleichpoliger Platten (23) ausgebildet sind, und Verbindungselementen (1) zum elektrischen Verbinden gleichpoliger Platten (23), **dadurch gekennzeichnet, dass** ein Verbindungselement (1) einen an seiner Oberseite offenen Grundkörper (2) mit einem den Platten (23) zugewandten Boden (3) und Seitenwänden (4) umfasst, die einen Blei enthaltenden Innenraum (5) umschließen, wobei sich in dem Boden (3) des Grundkörpers (2) Schlitze (6) befinden, durch die die Anschlussfahnen (24) gleichpoliger Platten (23) in den Innenraum (5) geführt sind, und die Anschlussfahnen (24) in dem Innenraum (5) über das dort enthaltene Blei miteinander und mit dem Grundkörper (2) elektrisch leitend verbunden sind, und dass das Verbindungselement (1) ferner eine Barriereschicht (7, 17) aufweist, die an einer Flächenseite des Bodens (3) aufgebracht ist und durch die die Anschlussfahnen (24) der gleichpoligen Platten (23) geführt sind.

12. Batterie nach Anspruch 11, **dadurch gekennzeichnet, dass** die Barriereschicht (7, 17) fluchtend zu den Schlitzen (6) des Grundkörpers (2) Einschnitte (8) aufweist, durch die Anschlussfahnen (24) der gleichpoligen Platten (23) geführt sind.

13. Verfahren zur Herstellung einer Batterie nach Anspruch 11 oder Anspruch 12, umfassend das Führen der Anschlussfahnen (24) der gleichpoligen Platten (23) durch die Barriereschicht (7, 17) und die Schlitze (6) im Boden (3) des Grundkörpers (2) in die Verbindungselemente (1).

14. Verfahren nach Anspruch 13, **dadurch gekennzeichnet, dass** das Verbindungselement (1) von oben auf die gleichpoligen Platten (23) unter Führung der Anschlussfahnen (24) der gleichpoligen Platten (23) durch die Barriereschicht (7, 17) und die Schlitze (6) im Boden (3) des Grundkörpers (2) aufgesteckt wird.

15. Verfahren nach Anspruch 13 oder Anspruch 14, **dadurch gekennzeichnet, dass** nach dem Aufstecken des Verbindungselementes (1) granuläres Blei (11), das sich in dem Innenraum (5) befindet, zur elektrischen Verbindung der Anschlussfahnen (24) gleichpoliger Platten (23) untereinander und mit dem Verbindungselement (1) verflüssigt wird.
